# EUROPEAN PATENT APPLICATION

(11) **EP 1 477 842 A1**
(43) Date of publication of application: **17.11.2004**
(21) Application number: 04252381.1
(22) Date of filing: 23.04.2004
(51) Int. Cl.: G02F 1/1335

(54) **Transflective display and method of fabricating the same**

(30) Priority: 25.04.2003 JP 2003121137
(71) Applicant: Sanyo Electric Co., Ltd., Moriguchi-shi, Osaka 570-8677 (JP)
(72) Inventor: Oda, Nobuhiko, Hashima-shi Gifu 501-6232 (JP); Yamada, Tsutomu, Mizuho-shi Gifu 501-0202 (JP); Okuyama, Masahiro, Inazawa-shi Aichi 492-8411 (JP)
(74) Representative: Calderbank, Thomas Roger

(57) **Abstract**

A transflective display having a reflective region fabricated with a simplified process, which does not require a reflective electrode to be made separately from the remaining layers, is provided. This display comprises a reflective material layer (7,24a,25,25a,81) formed on a substrate (1) and constituting a reflector in the reflective region (60a,70a,80a), an insulating layer (9) formed on the reflective material layer and a transparent electrode (10) formed on the insulating layer, the reflector wherein is formed by the same layer as that used to fabricate a gate electrode (2a) or a storage capacitor electrode (25) or source/drain electrodes (6a,6b) or a black matrix (81).

## Description

### BACKGROUND OF THE INVENTION

### Field of the Invention

The present invention relates to a display and a method of fabricating the same, and more particularly, it relates to a display having a reflective region and a method of fabricating the same.

### Description of the Background Art

In relation to a transflective liquid crystal display, there is generally proposed a structure obtained by providing a convex insulating layer on a region corresponding to a reflective region thereby equalizing the distance (optical path length) whereat light incident upon a transmissive region passes through a liquid crystal layer with the distance (optical path length) whereat light incident upon the reflective region passes through the liquid crystal layer. This structure is disclosed in Japanese Patent Laying-Open No. 2002-98951, for example.

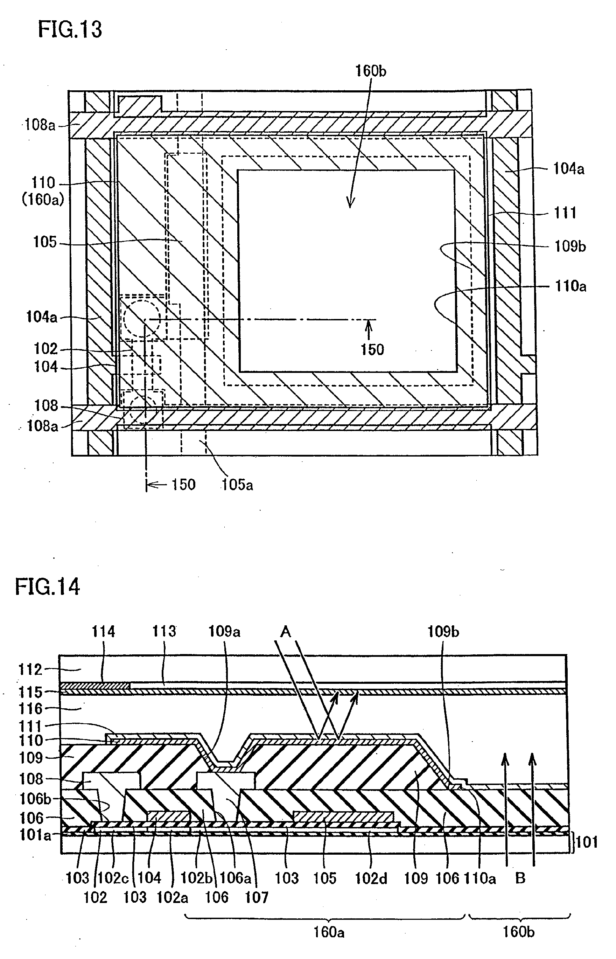

Fig. 13 is a plan view showing the structure of a conventional transflective liquid crystal display having a convex insulating layer (flattened layer). Fig. 14 is a sectional view of the conventional display taken along the line 150-150 in Fig. 13. The conventional transflective liquid crystal display has two regions, i.e., a reflective region 160a and a transmissive region 160b in each pixel. The reflective region 160a is provided with a reflective electrode 110, while the transmissive region 160b is provided with no reflective electrode 110 dissimilarly to the transmissive region 160a. Thus, the reflective region 160a displays an image by reflecting light incident along arrow A in Fig. 14 by the reflective electrode 110. On the other hand, the transmissive region 160b displays an image by transmitting light along arrow B in Fig. 14. The structure of the conventional transflective liquid crystal display is now described in detail.

An active layer 102 is formed on a region of a glass substrate 101, including a buffer layer 101a on the upper surface thereof, corresponding to the reflective region 160a. A source region 102b and a drain region 102c are formed on the active layer 102 to hold a channel region 102a therebetween at a prescribed interval. A gate electrode 104 is formed on the channel region 102a of the active layer 102 through a gate insulating layer 103. The source region 102b, the drain region 102c, the gate insulating layer 103 and the gate electrode 104 constitute a thin-film transistor (TFT). A storage capacitive electrode 105 is formed on a prescribed region of the gate insulating layer 103 corresponding to the reflective region 160a. A storage capacitive region 102d of the active layer 102, the gate insulating layer 103 and the storage capacitive electrode 105 constitute a storage capacitor. As shown in Fig. 13, the gate electrode 104 is connected to a gate line 104, while the storage capacitive electrode 105 is connected to a storage capacitive line 105a.

As shown in Fig. 14, an interlayer dielectric layer 106 having contact holes 106a and 106b is formed to cover the thin-film transistor and the storage capacitor. A source electrode 107 is formed to be electrically connected to the source region 102b through the contact hole 106a of the interlayer dielectric layer 106. A drain electrode 108 is formed to be electrically connected to the drain region 102c through the contact hole 106b of the interlayer dielectric layer 106. The drain electrode 108 is connected to a drain line 108a, as shown in Fig. 13. A flattened layer 109 of acrylic resin having a via hole 109a and an opening 109b is formed on the interlayer dielectric layer 106. This flattened layer 109 is formed to have a convex sectional shape. The side surfaces of the via hole 109a and the opening 109b of the flattened layer 109 are inclined by prescribed angles.

As shown in Fig. 14, a reflective electrode 110 is formed on a region of the flattened layer 109 corresponding to the reflective region 160a to be electrically connected to the source electrode 107 through the via hole 109a while extending along the upper surface of the flattened layer 109 and the side surface of the opening 190b of the flattened layer 109. An opening 110a is formed on a region of the reflective electrode 110 corresponding to the transmissive region 160b. A transparent electrode 111 is formed on a portion of the interlayer dielectric layer 106 located on the reflective electrode 110 and the opening 110a provided with neither the flattened layer 109 nor the reflective electrode 110. The transparent electrode 111 and the reflective electrode 110 constitute a pixel electrode.

Another glass substrate (counter substrate) 112 is provided on a position opposite to the glass substrate 101. A color filter 113 presenting red (R), green (G) or blue (B) is formed on the glass substrate 112. A black matrix layer 114 for preventing leakage of light between pixels is formed on a region of the glass substrate 112 corresponding to a clearance between the pixels. A transparent electrode 115 is formed on the upper surfaces of the color filter 113 and the black matrix layer 114. Orientation layers (not shown) are formed on the upper surfaces of the transparent electrodes 111 and 115 respectively. A liquid crystal layer 116 is charged between the orientation layers of the glass substrates 101 and 112.

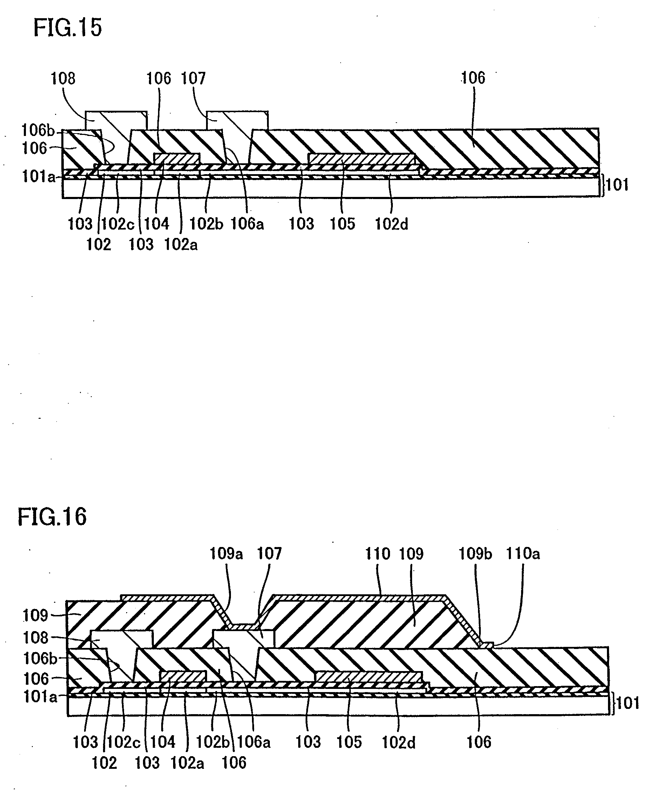

Figs. 15 to 17 are sectional views for illustrating a process of fabricating the conventional display.

As shown in Fig. 15, the active layer 102 is formed on the prescribed region of the glass substrate 101 including the buffer layer 101a on the upper surface thereof. Then, the gate insulating layer 103 is formed to cover the active layer 102. Thereafter an Mo layer formed on the overall surface is so patterned as to form the gate line 104a (see Fig. 13) including the gate electrode 104 and the storage capacitive line 105a including the storage capacitive electrode 105. Thereafter the gate electrode 104 is employed as a mask for implanting impurity ions into the active layer 102, thereby forming the pair of source and drain regions 102b and 102c to hold the channel region 102a therebetween. Then, the interlayer dielectric layer 106 is formed to cover the overall surface of the glass substrate 101. Thereafter the contact holes 106a and 106b are formed on regions of the interlayer dielectric layer 106 corresponding to the source and drain regions 102b and 102c respectively.

A metal layer (not shown) is formed to fill up the contact holes 106a and 106b while extending along the upper surface of the interlayer dielectric layer 106. This metal layer is so patterned as to form the source and drain electrodes 107 and 108. The drain line 108a (see Fig. 13) consisting of the same layer as the drain electrode 108 is also formed at the same time. The source electrode 107 is formed to be electrically connected to the source region 102b through the contact hole 106a while the drain electrode 108 is formed to be electrically connected to the drain region 102c through the contact hole 106b.

Then, the flattened layer 109 of acrylic resin is formed to cover the overall surface of the glass substrate 101, and the via hole 109a and the opening 109b are formed on prescribed portions of the flattened layer 109 respectively. Then, an AlNd layer (not shown) is formed to cover the overall surface, and prescribed regions thereof are thereafter removed. Thus, the reflective electrode 110 of AlNd is formed to be electrically connected to the source electrode 107 through the via hole 109a while extending along the upper surface of the flattened layer 109 and the side surface of the opening 109b of the flattened layer 109, as shown in Fig. 16. This reflective layer 110 is formed to have the opening 110a in the region corresponding to the transmissive region 160b. The reflective region 160a provided with the reflective electrode 110 and the transmissive region 160b, provided with no reflective electrode 110, corresponding to the opening 109b of the flattened layer 109 are formed in the aforementioned manner.

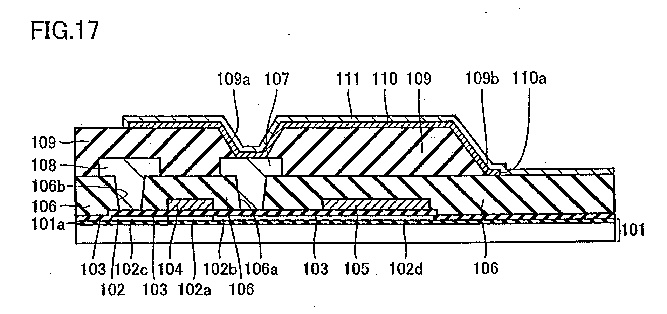

As shown in Fig. 17, the transparent electrode 111 is formed on the reflective electrode 110 and the portion of the interlayer dielectric layer 106 located on the opening 110a. Thereafter the orientation layer (not shown) is formed on the overall surface including the transparent electrode 111.

Finally, the color filter 113 is formed on the glass substrate (counter substrate) 112 provided opposite to the glass substrate 101 while the black matrix layer 114 is formed on the region of the glass substrate 112 corresponding to the clearance between the pixels. Then, the transparent electrode 115 and the orientation layer (not shown) are successively formed on the upper surfaces of the color filter 113 and the black matrix layer 114. The liquid crystal layer 116 is charged between the orientation layers of the glass substrates 101 and 112, thereby forming the conventional transflective liquid crystal display.

In the aforementioned conventional transflective liquid crystal display, however, the reflective electrode 110 for reflecting light on the reflective region 160a must be provided separately from the remaining layers, and hence additional steps are required for depositing the layer constituting the reflective electrode 110 and patterning this layer. Consequently, the fabrication process is disadvantageously complicated.

### SUMMARY OF THE INVENTION

An object of the present invention is to provide a display having a reflective region capable of simplifying the fabrication process with no requirement for providing a reflective electrode separately from the remaining layers.

Another object of the present invention is to provide a method of fabricating a display having a reflective region capable of simplifying the fabrication process.

In order to attain the aforementioned objects, a display according to a first aspect of the present invention, having a reflective region, comprises a reflective material layer, formed on a region of a substrate corresponding to the reflective region, having a function for serving as a reflective layer, an insulating layer formed on the reflective material layer and a transparent electrode formed on the insulating layer, while the reflective material layer is formed by the same layer as a layer having a prescribed function different from the function for serving as the reflective layer.

In the display according to the first aspect, the reflective layer can be formed simultaneously with the layer having the prescribed function different from the function for serving as the reflective layer, whereby no reflective layer may be separately formed. Consequently, the fabrication process can be simplified.

A display according to a second aspect of the present invention, having a reflective region, comprises a reflective material layer, formed on a region of a substrate corresponding to the reflective region, having a function for serving as a reflective layer, an insulating layer formed on the reflective material layer and a transparent electrode formed on the insulating layer, while the reflective material layer is formed by at least one layer selected from a group consisting of a source/drain electrode, a gate electrode, a storage capacitive electrode and a black matrix layer.

In the display according to the second aspect, the reflective layer can be formed simultaneously with at least one layer selected from the group consisting of the source/drain electrode, the gate electrode, the storage capacitive electrode and the black matrix layer, whereby no reflective layer may be separately formed. Consequently, the fabrication process can be simplified.

A method of fabricating a display having a reflective region according to a third aspect of the present invention comprises steps of forming a reflective material layer also having a prescribed function different from a function for serving as a reflective layer on a substrate, patterning the reflective material layer to be formed on a region corresponding to the reflective region, forming an insulating layer on the reflective material layer and forming a transparent electrode on the insulating layer.

In the method of fabricating a display according to the third aspect, the reflective layer can be formed simultaneously with the layer having the prescribed function different from the function for serving as the reflective layer, whereby the fabrication process can be simplified as compared with a case of separately forming the reflective layer.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a plan view showing the structure of a transflective liquid crystal display according to a first embodiment of the present invention;
Fig. 2 is a sectional view of the display according to the first embodiment taken along the line 50-50 in Fig. 1;
Figs. 3 to 7 are sectional views for illustrating a process of fabricating the display according to the first embodiment of the present invention;
Fig. 8 is a plan view slowing the structure of a transflective liquid crystal display according to a second embodiment of the present invention;
Fig. 9 is a sectional view of the display according to the second embodiment taken along the line 60-60 in Fig. 8;
Fig. 10 is a sectional view for illustrating a process of fabricating the display according to the second embodiment of the present invention;
Fig. 11 is a sectional view showing the structure of a transflective liquid crystal display according to a third embodiment of the present invention;
Fig. 12 is a plan view showing the structure of a display according to a modification of the present invention;
Fig. 13 is a plan view showing the structure of a conventional transflective liquid crystal display;
Fig. 14 is a sectional view of the conventional display taken along the line 150-150 in Fig. 13; and
Figs. 15 to 17 are sectional views for illustrating a process of fabricating the conventional display.

### DESCRIPTION OF THE PREFERRED EMBODIMENTS

Embodiments of the present invention are now described with reference to the drawings.

### (First Embodiment)

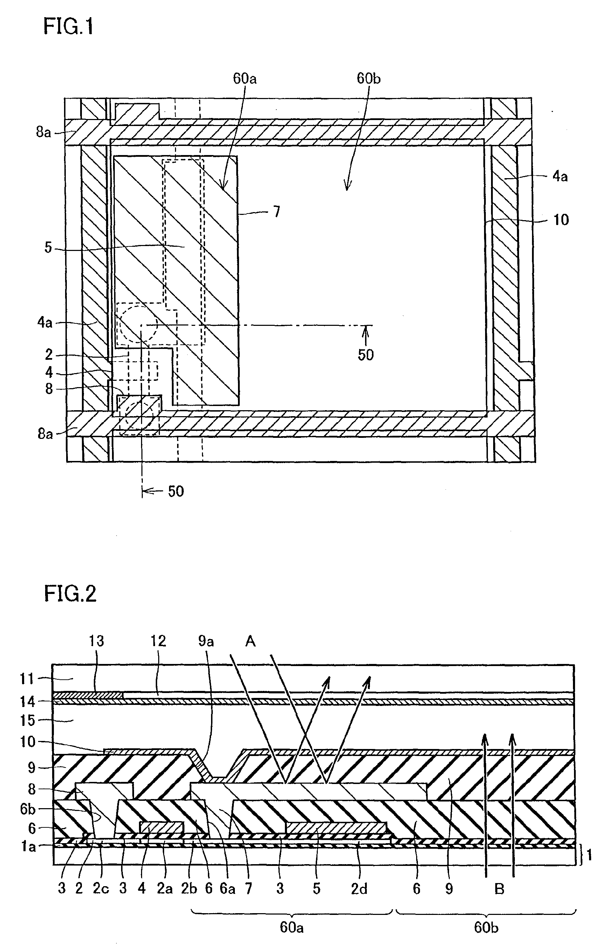

Referring to Figs. 1 and 2, a transflective liquid crystal display according to a first embodiment of the present invention has two regions, i.e., a reflective region 60a and a transmissive region 60b, in each pixel.

More specifically, an active layer 2 of non-single-crystalline silicon or amorphous silicon having a thickness of about 30 nm to about 50 nm is formed on a region of a glass substrate 1, including a buffer layer 1a consisting of a multilayer layer of an SiNₓ layer and an SiO₂ layer on the upper surface thereof, corresponding to the reflective region 60a, as shown in Fig. 2. The glass substrate 1 is an example of the "substrate" in the present invention. The active layer 2 is provided with a source region 2b and a drain region 2c to hold a channel region 2a therebetween at a prescribed interval. A gate electrode 4 consisting of an Mo layer having a thickness of about 200 nm to about 250 nm is formed on the channel region 2a of the active layer 2 through a gate insulating layer 3 having a thickness of about 80 nm to about 150 nm and consisting of an SiO₂ layer or a multilayer layer of an SiO₂ layer and an SiN layer. The source region 2b, the drain region 2c, the gate insulating layer 3 and the gate electrode 4 constitute a thin-film transistor. The gate electrode 4 is connected to a gate line 4a consisting of the same layer as the gate electrode 4, as shown in Fig. 1.

A storage capacitive electrode 5 consisting of an Mo layer having a thickness of about 200 nm to about 250 nm is formed on a prescribed region of the gate insulating layer 3 corresponding to the reflective region 60a, as shown in Fig. 2. A storage capacitive region 2d of the active layer 2, the gate insulating layer 3 and the storage capacitive electrode 5 constitute a storage capacitor. As shown in Fig. 1, the storage capacitive electrode 5 is connected to a storage capacitive line 5a consisting of the same layer as the storage capacitive electrode 5. The storage capacitive line 5a is used in common to pixels of each row.

As shown in Fig. 2, an interlayer dielectric layer 6 having a thickness of about 500 nm to about 700 nm and consisting of a multilayer layer of an SiO₂ layer and an SiNₓ layer is formed to cover the thin-film transistor and the storage capacitor. Contact holes 6a and 6b are formed through portions of the interlayer dielectric layer 6 and the gate insulating layer 3 located on the source and drain regions 2b and 2c respectively. A source electrode 7 is formed to be electrically connected to the source region 2b through the contact hole 6a. The source electrode 7 consists of an Mo layer, an Al layer and another Mo layer in ascending order, and has a thickness of about 400 nm to about 800 nm.

According to the first embodiment, the source electrode 7 is formed on a region corresponding to the reflective region 60a, as shown in Figs. 1 and 2. Thus, the source electrode 7 functions also as a reflective layer. Consequently, the reflective region 60a displays an image by reflecting light incident along arrow A in Fig. 2 by the source electrode 7. On the other hand, the transmissive region 60b displays an image by transmitting light along arrow B in Fig. 2. The source electrode 7 is an example of the "reflective material layer" or the "source/drain electrode" in the present invention.

A drain electrode 8 is formed to be electrically connected to the drain region 2c through the contact hole 6b. This drain electrode 8 consists of an Mo layer, an Al layer and another Mo layer in ascending order and has a thickness of about 400 nm to about 800 nm, similarly to the source electrode 7. The drain electrode 8 is connected to a drain line 8a, as shown in Fig. 1.

As shown in Fig. 2, a flattened layer 9 of acrylic resin including a via hole 9a and having a thickness of about 2 µm to about 3 µm is formed on the interlayer dielectric layer 6. This flattened layer 9 is an example of the "insulating layer" in the present invention. A transparent electrode 10 of IZO (indium zinc oxide) having a thickness of about 100 nm to about 150 nm is formed on the flattened layer 9. This transparent electrode 10 is formed to be connected to the source electrode 7 through the via hole 9a. This transparent electrode 10 constitutes a pixel electrode.

Another glass substrate (counter substrate) 11, a color filter 12 and a black matrix layer 13 are formed on a position opposite to the glass substrate 1, similarly to the conventional display. Another transparent electrode 14 of IZO having a thickness of about 100 nm to about 150 nm is formed on the upper surfaces of the color filter 12 and the black matrix layer 13.

Orientation layers (not shown) are formed on the upper surfaces of the transparent electrodes 10 and 14 respectively, and a liquid crystal layer 15 is charged between these orientation layers.

According to the first embodiment, as hereinabove described, the source electrode 7 is so formed on the region corresponding to the reflective region 60a that the source electrode 7 functioning also as the reflective layer and the drain electrode 8 can be formed in an ordinary step of forming the source and drain electrodes 7 and 8, whereby no reflective electrode (reflective layer) may be separately formed. Thus, the fabrication process can be simplified.

The process of fabricating the transflective liquid crystal display according to the first embodiment is now described with reference to Figs. 1 to 7.

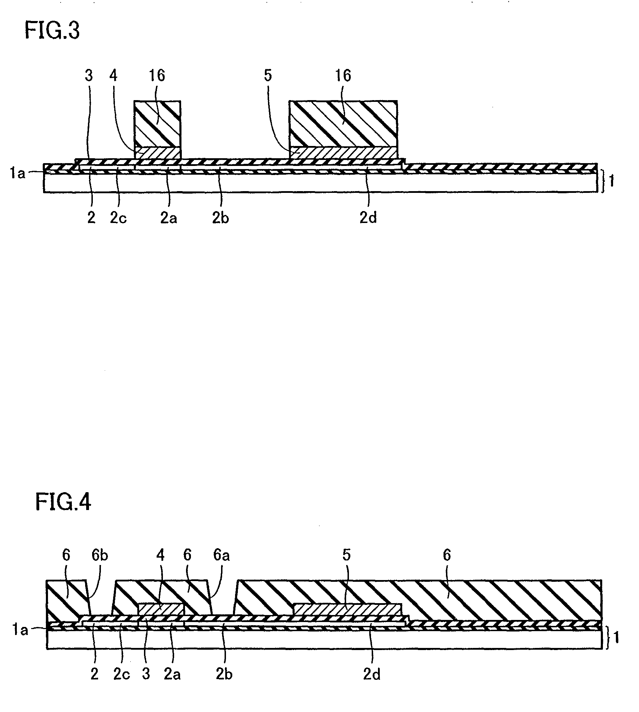

As shown in Fig. 3, the active layer 2 is formed on the prescribed region of the glass substrate 1 including the buffer layer 1a on the upper surface thereof. Then, the gate insulating layer 3 is formed to cover the active layer 2. Thereafter an Mo layer (not shown) is formed on the overall surface. Resist layers 16 are formed on prescribed regions of the Mo layer. The resist layers 16 are employed as masks for patterning the Mo layer by dry etching thereby forming the gate line 4a (see Fig. 1) including the gate electrode 4 and the storage capacitive line 5a including the storage capacitive electrode 5, and the resist layers 16 are removed.

Thereafter the gate electrode 4 is employed as a mask for implanting ions into the active layer 2, thereby forming the source and drain regions 2b and 2c.

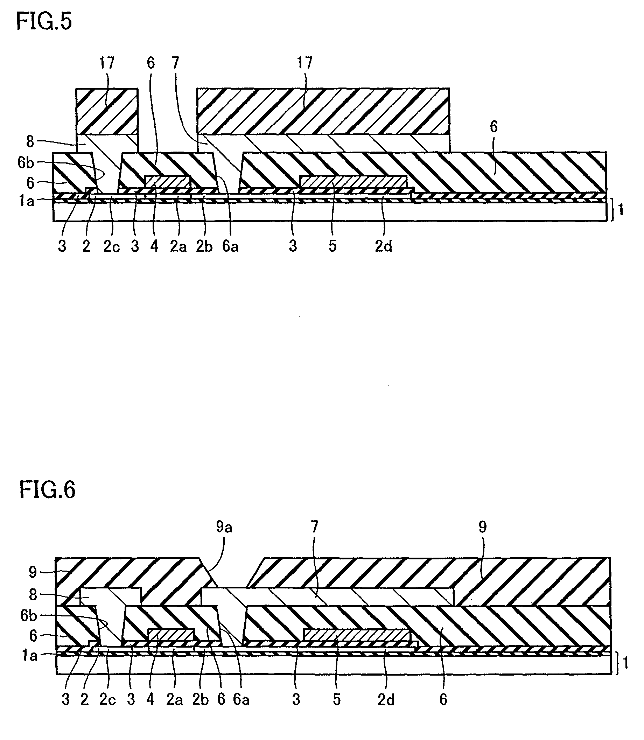

As shown in Fig. 4, the interlayer dielectric layer 6 is formed to cover the overall surface. Then, the contact holes 6a and 6b are formed in regions of the interlayer dielectric layer 6 corresponding to the source and drain regions 2b and 2c respectively. Then, a metal layer (not shown) is formed to fill up the contact holes 6a and 6b while extending along the upper surface of the interlayer dielectric layer 6. Resist layers 17 (see Fig. 5) are formed on prescribed regions of the metal layer.

According to the first embodiment, the resist layer 17 located on the portion corresponding to the region to be provided with the source electrode 7 is formed on the region corresponding to the reflective region 60a. The resist layers 17 are employed as masks for wet-etching the metal layer, thereby patterning the same. Thus, the source electrode 7 located on the region (see Fig. 1) corresponding to the reflective region 60a and the drain electrode 8 are formed as shown in Fig. 5. The drain line 8a (see Fig. 1) consisting of the same layer as the drain electrode 8 is also formed at the same time. The source electrode 7 is formed to be electrically connected to the source region 2b through the contact hole 6a, while the drain electrode 8 is formed to be electrically connected to the drain region 2c through the contact hole 6b. Thereafter the resist layers 17 are removed.

As shown in Fig. 6, the flattened layer 9 is formed to cover the overall surface, and the via hole 9a is thereafter formed in a prescribed portion thereof.

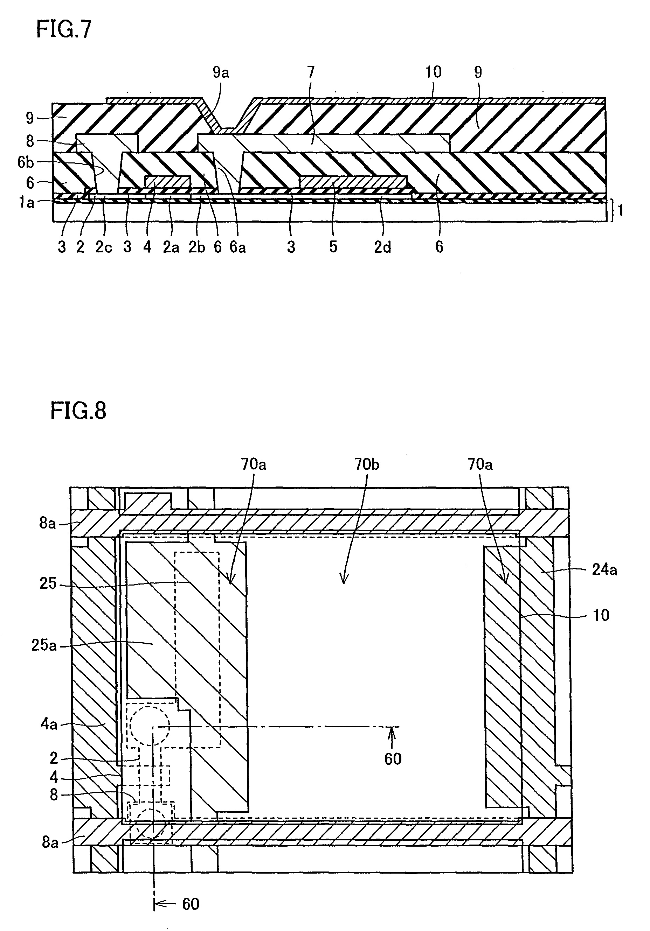

An IZO layer (not shown) is formed to cover the overall surface, and prescribed regions thereof are thereafter removed. Thus, the transparent electrode 10 is formed to be electrically connected to the source electrode 7 through the via hole 9a while extending along the upper surface of the flattened layer 9, as shown in Fig. 7. Thereafter the orientation layer (not shown) is formed on the transparent electrode 10.

Finally, the color filter 12 and the black matrix layer 13 are formed on the glass substrate (counter substrate) 11, and the transparent electrode 14 and the other orientation layer (not shown) are successively formed on the upper surfaces thereof. The liquid crystal layer 15 is charged between the aforementioned two orientation layers, thereby forming the transflective liquid crystal display according to the first embodiment shown in Fig. 2.

### (Second Embodiment)

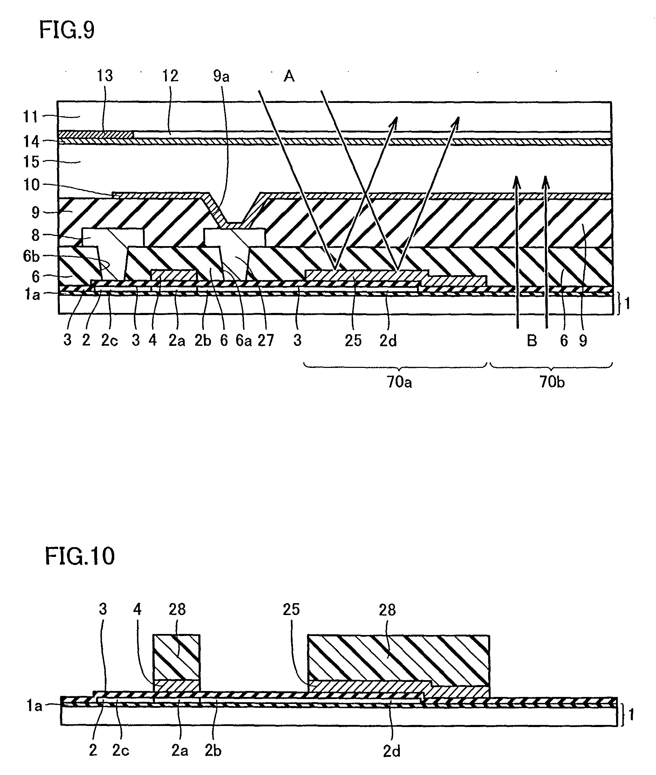

Referring to Figs. 8 and 9, a storage capacitive electrode 25 (storage capacitive line 25a) and a gate line 24a function as reflective layers in a transflective liquid crystal display according to a second embodiment of the present invention, dissimilarly to the aforementioned first embodiment. The remaining structure of the transflective liquid crystal display according to the second embodiment other than the storage capacitive electrode 25, the storage capacitive line 25a and the gate line 24a is similar to that of the aforementioned first embodiment.

The storage capacitive electrode 25 and the storage capacitive line 25a both consisting of Mo are formed on a region corresponding to a reflective region 70a. The gate electrode 24a is formed on another region corresponding to the reflective region 70a, as shown in Fig. 8. Thus, the storage capacitive electrode 25, the storage capacitive line 25a and the gate line 24a function also as reflective layers. Consequently, the reflective region 70a displays an image by reflecting light incident along arrow A in Fig. 9 by the storage capacitive electrode 25, the storage capacitive line 25a and the gate line 24a. On the other hand, a transmissive region 70b displays an image by transmitting light along arrow B in Fig. 9. The storage capacitive electrode 25, the storage capacitive line 25a and the gate line 24a are examples of the "reflective material layer" in the present invention.

According to the second embodiment, as hereinabove described, the storage capacitive electrode 25, the storage capacitive line 25a and the gate line 24a are formed on the regions corresponding to the reflective region 70a so that the storage capacitive electrode 25, the storage capacitive line 25a and the gate line 24a functioning also as the reflective layers can be simultaneously formed in an ordinary step of forming the storage capacitive electrode 25, the storage capacitive line 25a and the gate line 24a, whereby no reflective electrode (reflective layer) may be separately formed. Thus, the fabrication process can be simplified.

The process of fabricating the transflective liquid crystal display according to the second embodiment is now described with reference to Figs. 8 and 10. Illustration of steps similar to those in the first embodiment is simplified.

As shown in Fig. 10, an active layer 2 is formed on a prescribed region of a glass substrate 1 including a buffer layer 1a on the upper surface thereof. A gate insulating layer 3 is formed to cover the active layer 2. Thereafter an Mo layer (not shown) is formed on the overall surface. Resist layers 28 are formed on prescribed regions of the Mo layer. According to the second embodiment, the resist layer 28 located on a portion corresponding to the region provided with the storage capacitive line 25a including the storage capacitive electrode 25 is formed on the region corresponding to the reflective region 70a. The resist layers 28 are employed as masks for dry-etching the Mo layer thereby patterning the same. Thus, the storage capacitive line 25a including the storage capacitive electrode 25 and the gate line 24a (see Fig. 8) are formed on the regions corresponding to the reflective region 70a, as shown in Fig. 10. At the same time, another gate line 4a (see Fig. 8) including a gate electrode 4 is also formed by patterning the Mo layer. Thereafter the resist layers 28 are removed.

Subsequent fabrication steps are similar to those of the first embodiment. According to the second embodiment, a source electrode 27 is formed on a region not corresponding to the reflective region 70a, dissimilarly to the source electrode 7 (see Fig. 2) in the transflective liquid crystal display according to the first embodiment.

### (Third Embodiment)

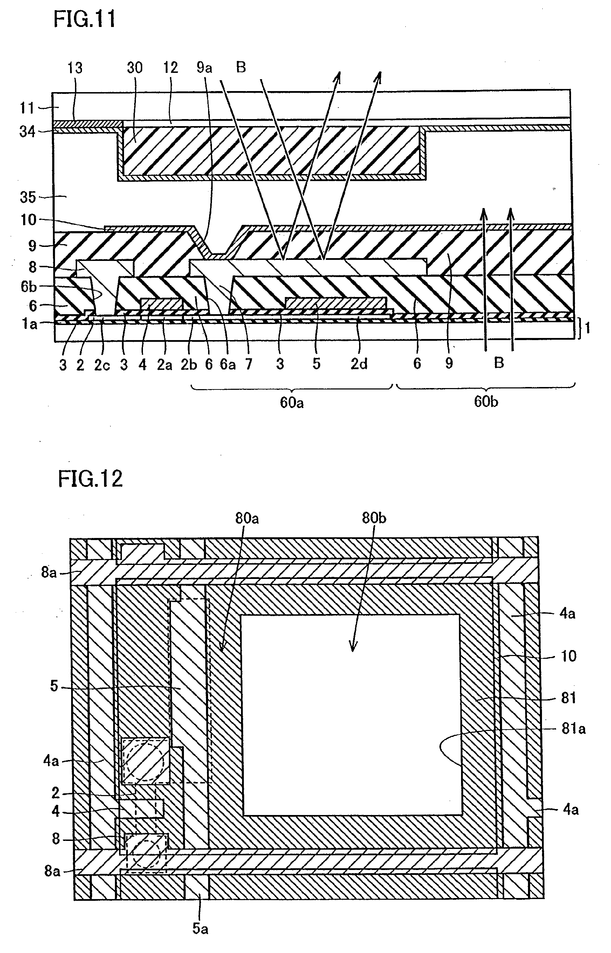

Referring to Fig. 11, a convex insulating layer 30 is provided on a region of a counter substrate corresponding to a reflective region 60a in a transflective liquid crystal display according to a third embodiment of the present invention, dissimilarly to the aforementioned first and second embodiments.

According to the third embodiment, the convex insulating layer 30 consisting of a photosensitive organic resin layer is formed on a region of a glass substrate 11, serving as the counter substrate, corresponding to the reflective region 60a, as shown in Fig. 11. A transparent electrode (counter electrode) 34 and an orientation layer (not shown) similar to those in the aforementioned embodiment are successively formed to cover the convex insulating layer 30. A liquid crystal layer 35 is charged between another orientation layer provided on another transparent electrode (pixel electrode) 10 and the orientation layer provided on the transparent electrode (counter electrode) 34.

According to the third embodiment, the convex insulating layer 30 is so formed on the region corresponding to the reflective region 60a as to vary the distance between the pixel electrode and the counter electrode with the reflective region 60a and a transmissive region 60b. More specifically, the thickness of the liquid crystal layer 35 in the reflective region 60a is half that in the transmissive region 60b. Thus, light passes through the liquid crystal layer 35 twice in the reflective region 60a while the same passes through the liquid crystal layer 35 only once in the transmissive region 60b, whereby optical path lengths of the light passing through the liquid crystal layer 35 in the reflective region 60a and the transmissive region 60b are equalized with each other.

The remaining structure of the third embodiment is similar to that of the aforementioned first embodiment.

In a process of fabricating the transflective liquid crystal display according to the third embodiment, a color filter 12 and a black matrix layer 13 are formed on the glass substrate 11.

Thereafter a photosensitive organic resin layer (not shown) is formed on the overall surfaces of the color filter 12 and the black matrix layer 13. Thereafter exposure and development are performed with a photomask having a prescribed pattern. Thus, the convex insulating layer 30 consisting of the photosensitive organic resin is formed on regions of the upper surfaces of the color filter 12 and the black matrix layer 13 corresponding to the reflective region 60a.

Finally, the transparent electrode 34 and the orientation layer (not shown) are successively formed to cover the convex insulating layer 30 and the liquid crystal layer 35 is charged between the aforementioned two orientation layers, thereby forming the transflective liquid crystal display according to the third embodiment as shown in Fig. 11. Steps of forming the elements up to the transparent electrode 10 and the other orientation layer (not shown) provided on the glass substrate 1 are similar to those of the aforementioned first embodiment.

According to the third embodiment, as hereinabove described, the convex insulating layer 30 is so formed on the region of the glass substrate (counter substrate) 11 corresponding to the reflective region 60a as to substantially equalize the optical path lengths in the reflective region 60a and the transmissive region 60b with each other, whereby dispersion in display quality can be reduced between cases of transmissive display and reflective display. According to the third embodiment, a source electrode 7 is formed on a region corresponding to the reflective region 60a similarly to the aforementioned first embodiment, whereby no reflective electrode (reflective layer) may be separately formed.

Although the present invention has been described and illustrated in detail, it is clearly understood that the same is by way of illustration and example only and is not to be taken by way of limitation, the spirit and scope of the present invention being limited only by the terms of the appended claims.

For example, while the present invention is applied to the transflective liquid crystal display having both of the reflective region 60a or 70a and the transmissive region 60b or 70b in each of the aforementioned first to third embodiments, the present invention is not restricted to this but is also applicable to a reflective liquid crystal display having only a reflective region.

The present invention is not restricted to the aforementioned first to third embodiments but an electrically floating reflective layer of the same layer as a source electrode connected with none o the source electrode, a drain electrode and a drain line can also be formed simultaneously with the source electrode or the like formed by patterning.

The present invention is not restricted to the aforementioned first to third embodiments but a metal layer having another prescribed function may be employed to function also as a reflective layer. For example, a drain line may be employed to function as a reflective layer. Alternatively, a black matrix layer (on-chip black matrix layer) 81 having an opening 81a on a portion corresponding to a transmissive region 80b may be formed immediately on a substrate provided with a thin-film transistor or between the substrate and a buffer layer, as shown in Fig. 12. Thus, the remaining portion of the black matrix layer 81 located on a reflective region 80a can be employed to function as a reflective layer. When the drain line or the black matrix layer 81 is employed to function as the reflective layer, no additional step may be newly added for forming a reflective electrode (reflective layer). Consequently, the fabrication process can be simplified.

The present invention is not restricted to the aforementioned first to third embodiments but is also applicable to a passive matrix liquid crystal display or a segment liquid crystal display other than an active matrix liquid crystal display.

The present invention is not restricted to the aforementioned first to third embodiments but a transparent substrate consisting of quartz or plastic or a glass substrate comprising no buffer layer may be employed.

Alternatively, a transparent electrode consisting of a transparent conductor (including the so-called semitransparent body) such as ITO (indium tin oxide) may be employed.

The present invention is not restricted to the aforementioned first to third embodiments but a gate electrode may be formed by a high melting point metal layer such as a Cr layer other than an Mo layer. Further, each of source and drain electrodes may be formed by three layers such as a Ti layer, an Al layer and another Ti layer or a Ti-W layer, an Al layer and another Ti-W layer in ascending order.

The present invention is not restricted to the aforementioned third embodiment but a convex insulating layer consisting of an organic material may be formed on a region of a counter substrate corresponding to a reflective region. Further, a convex insulating layer consisting of a plurality of layers may be employed.

The present invention is not restricted to the aforementioned third embodiment but a color filter may be formed to cover a convex insulating layer.

## Claims

1. A display, having a reflective region (60a, 70a, 80a), comprising:
a reflective material layer (7, 24a, 25, 25a, 81), formed on a region of a substrate (1) corresponding to said reflective region, having a function for serving as a reflective layer;
an insulating layer (9) formed on said reflective material layer; and
a transparent electrode (10) formed on said insulating layer, wherein
said reflective material layer is formed by the same layer as a layer having a prescribed function different from said function for serving as said reflective layer.

2. The display according to claim 1, wherein
said reflective material layer has both of said function for serving as said reflective layer and said prescribed function different from said function for serving as said reflective layer.

3. The display according to claim 2, wherein
said prescribed function different from said function for serving as said reflective layer is a function for serving as at least one layer selected from a group consisting of a source/drain electrode (7, 8), a gate electrode (4), a storage capacitive electrode (25) and a black matrix layer (81).

4. The display according to claim 2, wherein
said prescribed function different from said function for serving as said reflective layer is a function for serving as a gate electrode (4) and a storage capacitive electrode (25).

5. The display according to claim 1, further comprising:
a thin-film transistor, formed between said insulating layer and said substrate, having a pair of source/drain regions (2b, 2c), and
source/drain electrodes (7, 8) connected to said pair of source/drain regions, wherein
said reflective material layer having said function for serving as said reflective layer is formed by the same layer as a layer constituting said source/drain electrodes.

6. The display according to claim 5, wherein
said reflective material layer having said function for serving as said reflective layer is a layer constituting at least either one of said source/drain electrodes.

7. The display according to claim 1, further comprising a storage capacitor having a storage capacitive electrode (25), wherein
said reflective material layer having said function for serving as said reflective layer is formed by the same layer as a layer constituting a storage capacitive line (25a) of said storage capacitive electrode.

8. The display according to claim 1, further comprising a thin-film transistor, formed between said insulating layer and said substrate, having a gate electrode (4), wherein
said reflective material layer having said function for serving as said reflective layer is formed by the same layer as a layer constituting said gate electrode.

9. The display according to claim 1, further comprising a black matrix layer (81) formed between said insulating layer and said substrate, wherein
said reflective material layer is formed by the same layer as a layer constituting said black matrix layer.

10. The display according to claim 1, further comprising a transmissive region (60b, 70b, 80b) provided with no said reflective material layer in addition to said reflective region.

11. The display according to claim 10, further comprising:
a counter substrate (11) provided oppositely to said substrate, and
a convex insulating layer (30) provided on a region of said counter substrate corresponding to said reflective region.

12. The display according to claim 11, further comprising a liquid crystal layer (35) provided between said substrate and said counter substrate, wherein
the thickness of said convex insulating layer is so set that the thickness of a portion of said liquid crystal layer located on a region corresponding to said reflective region is substantially half the thickness of another portion of said liquid crystal layer located on another region corresponding to said transmissive region.

13. The display according to claim 1, further comprising a thin-film transistor, formed between said insulating layer and said substrate, having a gate electrode (4), and
a storage capacitor having a storage capacitive electrode (25), wherein
said reflective material layer having said function for serving as said reflective layer is constituted of a layer constituting said gate electrode and another layer constituting a storage capacitive line (25a) of said storage capacitive electrode.

14. The display according to claim 13, wherein
said layer constituting said gate electrode and said layer constituting said storage capacitive line are formed by the same layer.

15. The display according to claim 1, further comprising a pixel electrode including said transparent electrode, wherein
said pixel electrode is constituted of only said transparent electrode without including a reflective electrode.

16. The display according to claim 1, wherein
said reflective material layer having said function for serving as said reflective layer consists of a plurality of layers.

17. A display, having a reflective region (60a, 70a, 80a), comprising:
a reflective material layer (7, 24a, 25, 25a, 81), formed on a region of a substrate (1) corresponding to said reflective region, having a function for serving as a reflective layer;
an insulating layer (9) formed on said reflective material layer; and
a transparent electrode (10) formed on said insulating layer, wherein
said reflective material layer is formed by at least one layer selected from a group consisting of a source/drain electrode (7, 8), a gate electrode (4), a storage capacitive electrode (25) and a black matrix layer (81).

18. The display according to claim 17, wherein
said reflective material layer is formed by a layer constituting said gate electrode and said storage capacitive electrode.

19. A method of fabricating a display having a reflective region (60a, 70a, 80a), comprising steps of:
forming a reflective material layer (7, 24a, 25, 25a, 81) also having a prescribed function different from a function for serving as a reflective layer on a substrate(1);
patterning said reflective material layer to be formed on a region corresponding to said reflective region;
forming an insulating layer (9) on said reflective material layer; and
forming a transparent electrode (10) on said insulating layer.

20. The method of fabricating a display according to claim 19, further comprising a step of forming a thin-film transistor having a pair of source/drain regions (2b, 2c) between said insulating layer and said substrate, wherein
said step of forming said reflective material layer includes a step of forming source/drain electrode (7, 8) layers connected to said pair of source/drain regions, and
said step of patterning said reflective material layer includes a step of patterning at least one of said source/drain electrode layers to be formed on a region corresponding to said source/drain regions and said reflective region.

21. The method of fabricating a display according to claim 19, further comprising a step of forming a storage capacitor having a storage capacitive electrode (25), wherein
said step of forming said reflective material layer includes a step of forming a layer constituting a storage capacitive line (25a) of said storage capacitive electrode, and
said step of patterning said reflective material layer includes a step of patterning said layer constituting said storage capacitive line to be formed on said region corresponding to said reflective region.

22. The method of fabricating a display according to claim 19, further comprising a step of forming a thin-film transistor having a gate electrode (4) between said insulating layer and said substrate, wherein
said step of forming said reflective material layer includes a step of forming a layer constituting said gate electrode, and
said step of patterning said reflective material layer includes a step of forming said layer constituting said gate electrode to be formed on said region corresponding to said reflective region.

23. The method of fabricating a display according to claim 19, further comprising a step of forming a thin-film transistor having a gate electrode (4) and a storage capacitor having a storage capacitive electrode (25) between said insulating layer and said substrate, wherein
said step of forming said reflective material layer includes a step of forming a first layer for defining a layer constituting said gate electrode and another layer constituting a storage capacitive line (25a) of said storage capacitive electrode, and
said step of patterning said reflective material layer includes a step of patterning said first layer thereby forming said layer constituting said gate electrode and said layer constituting said storage capacitive line on said region corresponding to said reflective region.
